# EUROPÄISCHE PATENTSCHRIFT

(11) **EP 1 212 163 B1**
(45) Veröffentlichungstag und Bekanntmachung des Hinweises auf die Patenterteilung: **23.04.2003**
(21) Anmeldenummer: 00964099.6
(22) Anmeldetag: 01.09.2000
(51) Int. Cl.: B23K 1/00, F01N 3/28

(54) **VERFAHREN ZUR HERSTELLUNG EINES GESINTERTEN WABENKÖRPERS**
METHOD FOR PRODUCING A SINTERED HONEYCOMB
PROCEDE DE PRODUCTION D'UN CORPS A NID D'ABEILLES FRITTE

(30) Priorität: 14.09.1999 DE 19943878
(43) Veröffentlichungstag der Anmeldung: 12.06.2002
(73) Patentinhaber: Emitec Gesellschaft für Emissionstechnologie mbH, 53797 Lohmar (DE)
(72) Erfinder: KURTH, Ferdi, 53894 Mechernich (DE); BERGMANN, Andree, 99817 Eisenach-Hötzelsroda (DE); SCHLOTMANN, Helge, 51467 Bergisch Gladbach (DE); FAUST, Günther, 51143 Köln (DE); WIERES, Ludwig, 51491 Overath (DE)
(74) Vertreter: Kahlhöfer, Hermann, Dipl.-Phys.
(86) Internationale Anmeldenummer: EP0008592
(87) Internationale Veröffentlichungsnummer: WO01019560

(56) Entgegenhaltungen:
- EP-A- 0 653 264
- EP-A- 0 658 390
- EP-A- 0 736 677
- WO-A-96/08336

## Beschreibung

Der Gegenstand der Erfindung bezieht sich auf ein Verfahren zur Herstellung eines gesinterten Wabenkörpers aus dünnen hochtemperatur-korrosionsfesten Stahlblechlagen. Solche Wabenkörper werden insbesondere in Abgasanlagen von Kraftfahrzeugen als Katalysator-Trägerkörper und/oder als Träger von Adsorbermaterial eingesetzt.

Durch die WO 96/08336 ist ein Verfahren zur Herstellung einer metallischen Struktur, insbesondere eines Katalysator-Trägerkörpers aus zumindest teilweise strukturierten gewickelten, verschlungenen oder geschichteten Stahlblechlagen bekannt, bei dem die Stahlblechlagen zur Ausbildung einer metallischen Verbindung der Stahlblechlagen mit oder ohne Hilfsstoffe einer thermischen Behandlung unterworfen werden.

Bei einem Hilfsstoff kann es sich um ein Lotpulver handeln, welches auf die zu verlötenden Bereiche der Stahlblechlagen aufgebracht wird. Durch die DE 29 24 592 A1 sind unterschiedliche Verfahren zur Aufbringung von Lot bekannt.

Die Ausbildung von Verbindungsbereichen zwischen Stahlblechlagen kann nach der WO 96/08336 auch ohne Hilfsmittel dadurch erfolgen, daß eine thermische Behandlung durchgeführt wird, deren Temperatur unterhalb des Schmelzpunktes der Stahlblechlagen liegt, so daß die Stahlblechlagen miteinander versintert werden.

Durch die DE 29 47 694 A1 ist auch bekannt, daß der Sintervorgang dadurch vereinfacht wird, daß die Stahlblechlagen vor der Sinterung mit einer Metallbeschichtung versehen werden. In der Praxis hat sich die Sintertechnik zur Ausbildung von Wabenkörpern, insbesondere für Katalysator-Trägerkörper, bisher nicht durchgesetzt.

Bei Anwendungen von Wabenkörpern in Abgassystemen kommt es oft darauf an, daß sich diese schnell Aufheizen lassen. Eine Reduktion der Masse ist dafür besonders wichtig und kann durch die Verwendung relativ dünner Stahlblechlagen erreicht werden. Bei bekannten Katalysator-Trägerkörpern beträgt die Blechdicke meist ca. 40 bis 50 µm. Bei Stahlblechlagen, deren Dicke kleiner oder gleich 35 µm ist, ist festgestellt worden, daß die Qualität der Katalysator-Trägerkörper nur mit Schwierigkeiten gesichert werden kann, wenn die Stahlblechlagen mittels Lötverfahren miteinander verbunden werden. Lotansammlungen können zum Auflegieren an den Verbindungsstellen führen, was die Hochtemperatur-Korrosionsfestigkeit verringert.

US-A-5 657 923 ,das als nächstliegender Stand der Technik angesehen ist, offenbart ein Verfahren zum Herstellen eines metallischen Wabenkörpers mit folgenden Schritten:
Ausbilden eines Wabenkörpers durch Stapeln von Chrom und Aluminium enthaltenden Stahlblechlagen deren Dicke kleiner oder gleich 35 µm ist und von denen zumindest ein Teil strukturierte Stahlblechlagen sind, so daß der Wabenkörper für ein Fluid durchströmbare Kanäle aufweist Einbringen des Wabenkörpers in ein Mantelrohr;
Bildung von Verbindungen zwischen benachbarten Stahlblechlagen (1, 2) durch thermische Behandlung.

Hiervon ausgehend liegt der vorliegenden Erfindung die Aufgabe zugrunde, ein Verfahren zum Herstellen eines qualitativ hochwertigen metallischen Wabenkörpers anzugeben, der Stahlblechlagen einer Dicke von kleiner oder gleich 35 µm enthält. Gleichzeitig soll das Verfahren wirtschaftlich vorteilhaft sein. Auch ein entsprechend hergestellter, nicht gelöteter Wabenkörper soll geschaffen werden.

Diese Aufgabe wird durch ein Verfahren zum Herstellen eines metallischen Wabenkörpers mit den Merkmalen des Anspruchs 1 gelöst. Vorteilhafte Ausgestaltungen sind in den jeweils abhängigen Ansprüchen angegeben.

Das erfindungsgemäße Verfahren zum Herstellen eines metallischen Wabenkörpers weist folgende Schritte auf: Ausbilden eines Wabenkörpers durch Stapeln und/oder Wickeln von Chrom und Aluminium enthaltenden Stahlblechlagen, deren Dicke kleiner oder gleich 35 µm ist und von denen zumindest ein Teil strukturierte Stahlblechlagen sind, so daß der Wabenkörper für ein Fluid durchströmbare Kanäle aufweist; Einbringen des Wabenkörpers in ein Mantelrohr; Bildung von Verbindungen zwischen benachbarten Stahlblechlagen durch thermische Behandlung, insbesondere durch einen Sinterprozeß, wobei der Wabenkörper mit einem durchschnittlichen Temperaturtransienten von mindestens jeweils 25 K/min, vorzugsweise mindestens jeweils 30 K/min [Kelvin pro Minute] auf-über 1100°C, vorzugsweise auf etwa 1150° bis 1190°C, aufgeheizt und wieder abgekühlt wird.

Die im Vergleich zu herkömmlichen Löt- oder Sinterverfahren schnelle Aufheizung ist zunächst einmal sehr vorteilhaft, weil die Produktionszeit dadurch verkürzt wird. Das schnelle Aufheizen hat aber auch Vorteile bezüglich der chemischen Prozesse an der Oberfläche der Stahlblechlagen, da die Verbindung verschlechternde Oxidationsprozesse vermindert werden, während die Bildung von beispielsweise Carbiden, insbesondere Chromcarbiden, die die Verbindungen fördern, begünstigt werden. Da die dünnen Bleche eine geringe Wärmekapazität haben, lassen sie sich auch schneller Aufheizen, so daß Haltezeiten bei bestimmten Temperaturen zur Vergleichmäßigung des Temperaturprofils im Ofen weitestgehend vermieden werden können. Der gesamte thermische Verbindungsprozeß läßt sich so auf 90 Minuten oder weniger verkürzen. Unter durchschnittlichem Temperaturtransienten wird die mittlere Änderung der Temperatur pro Zeiteinheit während des gesamten Aufheizvorganges von der Anfangstemperatur im Ofen bis zur Höchsttemperatur bzw. die entsprechende Temperaturänderung pro Zeiteinheit während des Abkühlvorganges verstanden.

Die Stahlblechlagen sind vor dem Ausbilden des Wabenkörpers mit einem Walzöl mit hohem Kohlenstoffgehalt, insbesondere in Form von Graphitpulver, versehen, wodurch sich bei der thermischen Behandlung eine den Sinterprozeß fördernde Kohlenstoffschicht ausbildet. Beim Herstellen der Stahlbleche mit der gewünschten Dicke durch Kaltwalzen wird ohnehin immer ein Walzöl benutzt, welches aber bei herkömmlichen Herstellungsprozessen von Wabenkörpern meist vor oder bei der thermischen Behandlung entfernt wird. Erfindungsgemäß wird jedoch ein solches Walzöl gewählt, welches bei einer thermischen Behandlung Rückstände bildet, die im wesentlichen Kohlenstoff enthalten, da dieser Sintervorgänge begünstigt. Durch Zugabe von beispielsweise Graphit, bevorzugt in Form von feinem Pulver, zu dem Walzöl kann dies noch verstärkt werden. Graphit hat außerdem den Vorteil, daß es als Schmierstoff wirkt, was bei der Herstellung von Strukturen, insbesondere Wellungen, auf sehr dünnen Blechen, wie sie für erfindungsgemäße Wabenkörper eingesetzt werden, von großen Vorteil ist.

Günstig ist es auch bei dem erfindungsgemäßen Verfahren, die thermische Behandlung unter Vakuum oder zumindest Unterdruck mit definierter Atmosphäre ablaufen zu lassen, um ungewollte Oxidationen zu vermeiden und gezielt die Oberflächeneigenschaften des Wabenkörpers zu beeinflussen.

Weiterhin kann gemäß einer bevorzugten Ausführungsform der Erfindung durch gezieltes Einbringen von Spannungen oder durch Entspannen die Zahl der entstehenden Verbindungen in einzelnen Bereichen beeinflußt werden, insbesondere bei Wabenkörpem aus einer Vielzahl etwa spiral- oder evolventenförmig verlaufender Stahlblechlagen.

Es sei darauf hingewiesen, daß die Schnelligkeit des Aufheizens, die Art des Walzöles und die gezielte Einbringung von Spannungen bzw. Entspannungen jeweils allein, aber auch in beliebiger Kombination vorteilhaft für den Sinterprozeß sind.

An die thermische Behandlung schließt sich ein Abkühlschritt an. Dieser kann unter Vakuum oder Schutzgas durchgeführt werden. Eventuell vorhandene Reste von Kohlenstoff, die später bei der Beschichtung mit katalytisch aktivem Material oder Adsorbermaterial stören könnten, können während des Abkühlvorganges durch gezielte Zugabe einer Schutzgas-Sauerstoff-Atmosphäre beseitigt werden. Dabei verbrennen die Kohlenstoffreste und es bildet sich eine definierte Oxidschicht, die die Haftung späterer Beschichtungen verbessert.

Weitere Einzelheiten und Vorteile der Erfindung werden anhand des in der Zeichnung dargestellten Ausführungsbeispiels erläutert.

Es zeigen:
- Fig. 1: schematisch einen Wabenkörper in einer Stirnseitenansicht und
- Fig. 2: vergrößert miteinander verbundene Stahlblechlagen im Querschnitt.

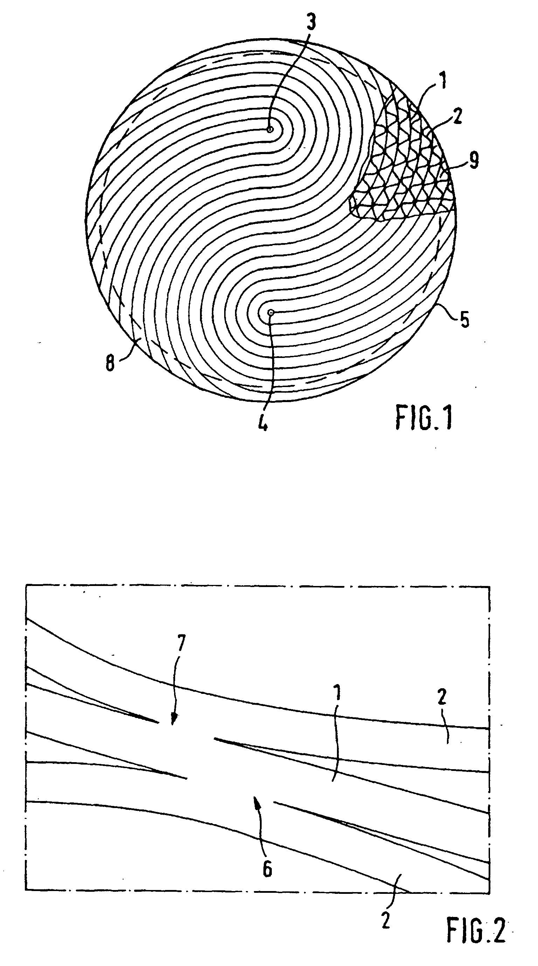

Der in der Fig. 1 dargestellte Wabenkörper stellt eine beispielhafte Ausgestaltung eines Katalysator-Trägerkörpers vor. Andere Ausgestaltungen und Geometrien des Wabenkörpers sind möglich.

Aus einem Stapel aus abwechselnden Lagen glatter 1 und gewellter 2 Stahlbleche, welche Kanäle 9 bilden, wird zunächst ein Stapel mit einer vorgegebenen Höhe und einer vorgegebenen Länge gebildet. Je nach Fertigungsmethode und gewünschtem, herzustellenden Querschnitt braucht der Stapel zu Beginn des Herstellungsvorgangs nicht unbedingt zu einem Quader mit ebenen Seitenflächen geschichtet zu sein. Andere Formen zum Beispiel Parallelogramm oder dergleichen, können bei der Herstellung vorteilhaft sein. Ein solcher Stapel wird danach mittels einer Gabel oder ähnlich fixiert wirkenden Vorrichtung an den Fixpunkten 3, 4 gefaßt durch Drehen der Gabel bzw. Umbiegen der Stapelenden gegensinnig verschlungen. Auf diese Weise entsteht eine Form, wie sie schematisch in der Fig. 1 dargestellt ist.

Die verschlungenen Stahlblechlagen 1, 2 sind in einem Mantelrohr 5 angeordnet. Das Mantelrohr kann auch aus mehreren Segmenten bestehen.

Der so vorbereitete Wabenkörper kann mit einer Beschichtung, die Kohlenstoffund/oder Kohlenstoffverbindungen enthält, versehen werden. Die Beschichtung wird bereits auf die Stahlblechlagen 1, 2 aufgebracht, bevor diese durch Stapeln und/oder Wickeln zu einem Trägerkörper verarbeitet werden. Insbesondere kann der Kohlenstoff schon in dem beim Kaltwalzen verwendeten Walzöl enthalten sein, insbesondere auch in Form von zusätzlich in dem Öl enthaltenem Graphitpulver.

Der so vorbereitete Wabenkörper wird einer thermischen Behandlung, insbesondere einem Sinterprozeß unterzogen, durch den die Stahlblechlagen in Verbindungsbereichen miteinander verbunden werden. Während der thermischen Behandlung erfolgt eine Zersetzung des Walzöls und eine Ausbildung von Carbiden, insbesondere Chromcarbiden, an der Oberfläche, die einen Beitrag zur Festigkeit der Verbindungen der Stahlblechlagen untereinander leisten. Vorzugsweise sind die Stahlblechlagen ca. 15 bis 25 µm dick.

In der Fig. 2 ist vergrößert der Verbindungsbereich benachbarter Stahlblechlagen 1, 2 dargestellt. Die Verbindungsbereiche 6, 7 sind zusammengesintert und weisen Chromcarbide auf. Bei der Herstellung eines Wabenkörpers kann durch die Einstellung der Werkzeuge die Spannung im Inneren des Wabenkörpers und damit die Anpreßkraft zwischen den Stahlblechlagen an den Berührungsstellen beeinflußt werden. Bei Wabenkörpern, die nicht aus wenigen Blechlagen spiralig gewickelt sind, sondem die aus einer Vielzahl von einzelnen Stahlblechen 1, 2 bestehen, deren Enden auf des Mantelrohr 5 zulaufen und dort befestigt sind, läßt sich die Spannungsverteilung über den Querschnitt des Wabenkörpers auch durch gezieltes Entspannen, beispielsweise durch Walken oder Hämmern, beeinflussen. So weist ein mit Spannung hergestellter und anschließend gewalkter Wabenkörper dieser Bauart in einem Außenbereich 8 (siehe Fig. 1) mehr Verbindungen 6, 7 auf als im Inneren, was seine mechanischen Eigenschaften verbessert. Es sei noch darauf hingewiesen, daß zwar die Verbindung der Stahlbleche 1, 2 untereinander erfindungsgemäß durch Sintern erfolgt, daß aber die Verbindung zum Mantelrohr 5 entweder durch Sintern oder durch Löten erfolgen kann, je nach den Anforderungen an die Haltbarkeit dieser Verbindungen.

### Bezugszeichenliste

- 1: glatte Stahlblechlage
- 2: gewellte Stahlblechlage
- 3, 4: Fixpunkt
- 5: Mantelrohr
- 6, 7: Verbindungsbereich
- 8: äußerer Querschnittsbereich
- 9: Kanal

## Patentansprüche

1. Verfahren zum Herstellen eines metallischen Wabenkörpers mit folgenden Schritten:
Ausbilden eines Wabenkölpers durch Stapeln und/oder Wickeln von Chrom und Aluminium enthaltenden Stahlblechlagen (1, 2), deren Dicke kleiner oder gleich 35 µm ist und von denen zumindest ein Teil strukturierte Stahlblechlagen (1, 2) sind, so daß der Wabenkörper für ein Fluid durchströmbare Kanäle (9) aufweist, wobei die Stahlbleche mit einem Walzöl, das bereits beim Kaltwalzen der Stahlbleche aufgebracht wird, versehen sind, welches durch seine Zusammensetzung und/oder durch Zusätze eine kohlenstoffreiche Schicht auf der Oberfläche der Stahlbleche bildet, wenn der Wabenkörper aufgeheizt wird;
Einbringen des Wabenkörpers in ein Mantelrohr (5);
Bildung von Verbindungen zwischen benachbarten Stahlblechlagen (1, 2) durch thermische Behandlung, insbesondere durch einen Glühprozeß, wobei der Wabenkörper mit einem durchschnittlichen Temperaturtransienten von mindestens jeweils 25 K/min, vorzugsweise mindestens jeweils 30 K/min auf über 1100°C, vorzugsweise auf etwa 1150° bis 1190°C, aufgeheizt und wieder abgekühlt wird.

2. Verfahren nach Anspruch 1, bei dem die thermische Behandlung unter Unterdruck oder Vakuum durchgeführt wird.

3. Verfahren nach Anspruche 1 oder 2, bei dem dem Walzöl als Zusatz Graphit, insbesondere als feines Pulver, beigemischt wird, um den Kohlenstoffanteil zu erhöhen.

4. Verfahren nach einem der vorhergehenden Ansprüche, bei dem der Wabenkörper vor der thermischen Behandlung gezielt durch Walken, Hämmern oder dergleichen zumindest in Teilbereichen entspannt wird, um in diesen Teilbereichen eine hohe und gleichmäßige. Verbindungsqualität der Berührungsstellen zu erreichen.

5. Verfahren nach Anspruch 4, bei dem der Wabenkörper ein Körper mit einer Vielzahl von etwa spiralförmig oder evolventenförmig nach außen verlaufenden Stahlblechlagen (1, 2) ist, der durch gezieltes Einbringen von Spannungen und/oder durch Walken im äußeren Bereich (8) ein Spannungsprofil erhält, bei dem mehr Verbindungen in einem äußeren Bereich (8) zwischen den Berührongsstellen der Stahlblechlagen (1, 2) entstehen als in einem inneren Bereich des Querschnitts.

## Claims

1. A method for producing a metallic honeycomb body with the following steps:
forming a honeycomb body by stacking and/or winding layers of steel sheet (1, 2) containing chromium and aluminum, the thickness of which is less than or equal to 35 µm and at least some of which are structured layers of steel sheet (1, 2), so that the honeycomb body has channels (9) through which a fluid can flow, whereas the steel sheets are provided with a rolling oil, said oil being applied already during the cold rolling of the steel sheets and, as a result of its composition and/or additives, forming a carbon-rich layer on the surface of the steel sheets when the honeycomb body is heated up;
introducing the honeycomb body into a tubular jacket (5);
forming connections between neighboring layers of steel sheet (1, 2) by thermal treatment, in particular by an annealing process, the honeycomb body being heated up to over 1100°C, preferably to approximately 1150°C to 1190°C, and cooled down again, with an average temperature transient of at least in each case 25 K/min, preferably at least in each case 30 K/min.

2. The method as claimed in claim 1, in which the thermal treatment is carried out under low pressure or vacuum.

3. The method as claimed in claim 1 or 2, in which graphite, in particular as fine powder, is mixed in with the rolling oil as an additive, in order to increase the carbon fraction.

4. The method as claimed in one of the preceding claims, in which the honeycomb body is stress-relieved selectively, at least in subregions, by flexing, hammering or the like, before the thermal treatment, in order to achieve a high and uniform connecting quality of the touching locations in these subregions.

5. The method as claimed in claim 4, in which the honeycomb body is a body with a multiplicity of layers of steel sheet (1, 2) running outward in an approximately spiral or involute form, said body obtaining a stress profile in the outer region (8) by selective introduction of stresses and/or flexing, in which more connections are produced in an outer region (8) between the touching locations of the layers of steel sheet (1, 2) than in an inner region of the cross section.

## Revendications

1. Procédé destiné à la fabrication d'un corps en nid d'abeilles métallique avec les étapes suivantes :
Formation d'un corps en nid d'abeilles par empilage et/ou enroulement de couches de tôles en acier (1, 2) contenant du chrome et de l'aluminium, dont l'épaisseur est plus faible que ou égale à 35 µm et dont au moins une partie sont des couches de tôles structurées en acier (1, 2), de sorte que le corps en nid d'abeilles présente des canaux (9) pouvant être parcourus par un fluide, dans quel cas les tôles en acier sont pourvues d'une huile de laminage, qui est déjà rapportée lors du laminage à froid des tôles en acier et qui par sa composition et/ou par des additifs forme une couche riche en carbone sur la surface des tôles en acier lorsque le corps en nid d'abeilles est réchauffé ;
introduction du corps en nid d'abeilles dans un tube d'enveloppe (5) ;
formation de liaisons entre des couches de tôles en acier adjacentes (1, 2) par traitement thermique, notamment par un processus de recuisson, dans quel cas le corps en nid d'abeilles est chauffé à plus de 1100°C, de préférence à environ 1150°C à 1190°C et à nouveau refroidi, avec un transitoire moyen de température d'au moins respectivement 25 K/min, de préférence au moins respectivement 30 K/min.

2. Procédé selon la revendication 1, dans le cas duquel le traitement thermique est effectué à pression basse ou sous vide.

3. Procédé selon la revendication 1 ou 2, dans le cas duquel du graphite, notamment comme poudre fine, est mélangé en tant qu'additif à l'huile de laminage, afin d'augmenter la part de carbone.

4. Procédé selon l'une des revendications précédentes, dans le cas duquel le corps en nid d'abeilles est détendu de manière sélective au moins dans des régions partielles par assouplissement, martelage ou semblables, avant le traitement thermique, afin d'obtenir dans ces régions partielles une qualité de liaison élevée et uniforme des endroits de contact.

5. Procédé selon la revendication 4, dans le cas duquel le corps en nid d'abeilles est un corps avec une multiplicité de couches de tôles en acier (1, 2) s'étendant vers l'extérieur environ en forme de spirale ou en forme de développante, lequel corps obtient un profil de contrainte par l'introduction sélective de contraintes et/ou par assouplissement dans la région extérieure (8), dans le cas duquel plus de liaisons sont formées dans une zone extérieure (8) entre les endroits de contact des couches de tôles en acier (1,2) que dans une région intérieure de la section.
